# EUROPÄISCHE PATENTANMELDUNG

(11) **EP 4 321 287 A1**
(43) Veröffentlichungstag der Anmeldung: **14.02.2024**
(21) Anmeldenummer: 23179445.4
(22) Anmeldetag: 15.06.2023
(51) Int. Cl.: B23D 45/04, B23D 47/02, B27B 5/20

(54) **ELEKTRISCHE BEARBEITUNGSMASCHINE**

(30) Priorität: 27.06.2022 DE 102022115896
(71) Anmelder: Mafell AG, 78727 Oberndorf a.N. (DE)
(72) Erfinder: DAUS, Felix, 78655 Dunningen Seedorf (DE)
(74) Vertreter: Manitz Finsterwald Patent- und Rechtsanwaltspartnerschaft mbB

(57) **Zusammenfassung**

Die Erfindung betrifft eine elektrische Bearbeitungsmaschine, insbesondere Kappsäge, zum Bearbeiten von Werkstücken, insbesondere zum Sägen, mit einem Gestell und mit einer an dem Gestell angebrachten, ein Bearbeitungswerkzeug, insbesondere ein Sägeblatt, umfassenden Arbeitseinheit, wobei die Arbeitseinheit an dem Gestell über eine Führung angebracht ist, die eine geführte Arbeitsbewegung der Arbeitseinheit relativ zu dem Gestell ermöglicht, wobei die Führung als ein Getriebe, insbesondere als ein Koppelgetriebe, ausgebildet ist, und wobei ein durch das Getriebe vorgegebener Arbeitsbereich der Arbeitseinheit, insbesondere des Bearbeitungswerkzeugs, einer zusätzlichen Beschränkung unterworfen ist, insbesondere wobei die zusätzliche Beschränkung eine mechanische Begrenzung umfasst, insbesondere einen geschlossenen oder teilweise offenen Rahmen oder zumindest ein Anschlagelement.

## Beschreibung

Die Erfindung betrifft eine elektrische Bearbeitungsmaschine, insbesondere eine Kappsäge, zum Bearbeiten von Werkstücken, insbesondere zum Sägen, mit einem Gestell und mit einer an dem Gestell angebrachten, ein Bearbeitungswerkzeug, insbesondere ein Sägeblatt, umfassenden Arbeitseinheit.

Derartige Bearbeitungsmaschinen sind grundsätzlich bekannt, beispielsweise in Form von sogenannten Kappsägen, aber auch in Form anderer Maschinen zur Bearbeitung beispielsweise von Werkstücken aus Holz, Kunststoff oder Metall.

Bei derartigen Bearbeitungsmaschinen ist die Arbeitseinheit am Gestell relativ zu diesen bewegbar angebracht, um eine Arbeitsbewegung der Arbeitseinheit und damit des Bearbeitungswerkzeugs relativ zu dem Gestell und relativ zu einem jeweils zu bearbeitenden Werkstück durchzuführen. Bei Kappsägen, die insbesondere dazu dienen, meist eine langgestreckte Form besitzende Werkstücke, wie beispielsweise Leisten aus Holz oder Schienen oder Rohre aus Kunststoff oder Metall, zu kappen, also abzukürzen, ist die mit dem Sägeblatt versehene Arbeitseinheit um eine einzige horizontale Achse verschwenkbar am Gestell angebracht.

Von Kappsägen, aber auch von anderen Bearbeitungsmaschinen, wird in der Praxis häufig verlangt, auch vergleichsweise große Werkstücke zu bearbeiten. Hierfür ist ein relativ großer Arbeitsbereich oder - z.B. bei einer Kappsäge - eine relativ große Schnittlänge erforderlich. Um eine große Schnittlänge zu erreichen, wird die Arbeitseinheit nach dem Herunterschwenken linear in einer horizontalen Richtung bewegt, beispielsweise mittels Führungsstangen. Kappsägen, die mit einer derartigen Zugfunktion entlang einer linearen Achse versehen sind, werden auch als Kapp-Zug-Sägen bezeichnet. Die zusätzliche Linearführung, insbesondere die hierfür vorgesehenen Linearauszüge und Lagerungselemente, haben zur Folge, dass derartige Maschinen einen vergleichsweise großen Bauraum benötigen und zudem relativ schwer sind. Dabei ist die Linearführung außerdem relativ großen Biegebelastungen ausgesetzt. Die erforderliche Anordnung der für die Linearführung vorgesehenen Bauteile ist in der Praxis eher schlecht für die Aufnahme derartiger Kräfte geeignet. Hieraus resultiert insgesamt eine nicht zu vernachlässigende Durchbiegung des Systems, was letzten Endes unpräzise Sägeschnitte zur Folge hat.

Es ist außerdem bekannt, dass die Arbeitseinheit an dem Gestell über eine Führung angebracht ist, welche als ein Koppelgetriebe - beispielsweise als ein Viergelenkgetriebe - ausgebildet ist, sodass die geführte Arbeitsbewegung der Arbeitseinheit, also deren Kinematik, in einer jeweils gewünschten Weise auf eine Bahnkurve festgelegt werden kann. Hierzu wird beispielsweise auf DE 10 2019 129 535 A1 verwiesen.

Diese Festlegung auf eine Bahnkurve limitiert jedoch die Flexibilität beim Führen der Arbeitseinheit.

Aufgabe der Erfindung ist es, eine elektrische Bearbeitungsmaschine der eingangs genannten Art dahingehend zu verbessern, dass bei vorgegebenem Bauraum möglichst große Werkstücke bearbeitet werden können, d.h. die Arbeitsbewegung der Arbeitseinheit einen möglichst großen Arbeitsbereich abdeckt, ohne auf eine Bahnkurve beschränkt zu sein und ohne die Funktionalität der Maschine und insbesondere die Präzision der Werkstückbearbeitung zu beeinträchtigen. Insbesondere soll gleichzeitig ein möglichst einfacher und stabiler Aufbau der Maschine bei möglichst geringem Gewicht realisiert werden können.

Die Lösung dieser Aufgabe erfolgt durch die Merkmale des Anspruchs 1.

Erfindungsgemäß ist vorgesehen, dass die Arbeitseinheit an dem Gestell über eine Führung angebracht ist, die eine geführte Arbeitsbewegung der Arbeitseinheit relativ zu dem Gestell ermöglicht, dass die Führung als ein Getriebe ausgebildet ist, und dass ein durch das Getriebe vorgegebener Arbeitsbereich der Arbeitseinheit einer zusätzlichen Beschränkung unterworfen. Die zusätzliche Beschränkung kann eine mechanische Begrenzung umfassen, insbesondere einen geschlossenen oder teilweise offenen Rahmen oder zumindest ein Anschlagelement.

Das Getriebe kann zwei oder mehr Getriebeglieder aufweisen. Beispielsweise kann das Getriebe ein sogenannter Zweischlag sein, der z.B. eine an das Gestell angelenkte Schwinge als ein Getriebeglied und die gelenkig mit der Schwinge verbundene Arbeitseinheit als weiteres, hier auch als Koppel bezeichnetes Getriebeglied umfasst und einen Freiheitsgrad von f = 2 besitzt und so dem Anwender eine entsprechende Freiheit beim Führen der Arbeitseinheit gibt. Es ist erfindungsgemäß aber möglich, die Anzahl der Getriebeglieder zu erhöhen, ohne den Freiheitsgrad zu verändern, um die Stabilität der Anordnung zu erhöhen, was jedoch mehr Bauraum erfordern kann. So kann das Getriebe zum Beispiel vier oder fünf Getriebeglieder aufweisen. Der Aufbau des Getriebes hängt somit von der konkreten Maschine ab.

Während einerseits ein Getriebe dem Anwender mehr Freiheit beim Führen der Arbeitseinheit gibt, kann durch die erfindungsgemäß vorgesehene Beschränkung dafür gesorgt werden, dass die Arbeitseinheit unerwünschte Positionen relativ zu dem Gestell nicht erlangen kann. Verkürzt gesagt ist der Arbeitsbereich frei, aber beschränkt, d.h. innerhalb von durch die Beschränkung vorgegebenen Grenzen kann die Arbeitseinheit frei bewegt werden. Die Beschränkung ist nicht in dem Sinne zu verstehen, dass durch sie die Anzahl der Freiheitsgrade des Getriebes reduziert wird.

Der durch das Getriebe vorgegebene Arbeitsbereich ist dabei der ohne die zusätzliche Beschränkung mögliche Arbeitsbereich, dessen Grenzen alleine durch die mechanischen Gegebenheiten des Getriebes, insbesondere Abmessung und Lage der Getriebeglieder, vorgegeben ist. Der beschränkte Arbeitsbereich ist der tatsächliche Arbeitsbereich, in welchem die Arbeitseinheit, insbesondere also das Bearbeitungswerkzeug, eine bestimmungsgemäße Bearbeitung von Werkstücken durchführen kann.

Getriebe sind dem Fachmann grundsätzlich bekannt. Diese umfassen beispielsweise eine Basis und eine Koppel, die durch Schwingen miteinander verbunden sind. Bei den Schwingen kann es sich jeweils um starre Elemente handeln, die gelenkig mit der Basis und der Koppel verbunden sind. Bei der erfindungsgemäßen Integration eines Getriebes in die Bearbeitungsmaschine bildet das Gestell die Basis und bildet die Arbeitseinheit eine Koppel des Getriebes.

Das erfindungsgemäße Getriebe ist so ausgebildet, dass der Arbeitsbereich der Arbeitseinheit nicht auf eine Bahnkurve beschränkt, sondern durch eine zweidimensionale Fläche gebildet ist, welche beispielsweise in einer vertikalen Ebene liegen kann. Dies ermöglicht es dem Anwender, wenn die Bearbeitungsmaschine beispielsweise als Kappsäge ausgeführt ist, die Arbeitseinheit nach Belieben in dieser Ebene - bei einer Säge als Schnittebene bezeichnet - zu führen, wodurch verschiedenartige Schnitte, wie zum Beispiel ein rein vertikales Kappen, ein Kappen mit Zugfunktion oder Nutschnitte, durchgeführt werden können. Ein weiterer Vorteil ist, dass die funktionale Trennung zwischen dem Kappen und dem Ziehen für den Anwender praktisch nicht wahrnehmbar ist.

Die Erfindung ist nicht auf Kappsägen beschränkt. Auch andere Bearbeitungsmaschinen, insbesondere zur Bearbeitung von Werkstücken aus Holz, Metall oder Kunststoff, bei denen eine Arbeitseinheit an einem Gestell relativ zu diesem bewegbar angebracht sei muss, um Arbeitsbewegungen relativ zu einem Werkstück durchführen zu können, können erfindungsgemäß mit einer Führung für die Arbeitseinheit in Form eines Getriebes versehen werden.

Vorzugsweise ist die erfindungsgemäße Bearbeitungsmaschine derart ausgelegt, dass die Arbeitseinheit manuell von einem Benutzer relativ zum Gestell bewegt werden muss. Die Erfindung schließt aber einen motorischen Antrieb der Arbeitseinheit zum Bewegen der Arbeitseinheit relativ zum Gestell und somit einen automatisierten Betrieb der Maschine nicht aus.

Die Arbeitseinheit ist vorzugsweise mit einem Antriebsmotor für das Bearbeitungswerkzeug versehen, wobei der Antriebsmotor insbesondere dazu ausgebildet ist, das Bearbeitungswerkzeug in Rotation zu versetzen. Die Bewegung des Bearbeitungswerkzeugs ist aber grundsätzlich nicht auf eine Rotation beschränkt. Die Bewegung des Arbeitswerkzeugs kann beispielsweise auch eine periodische Hin- und Herbewegung sein. Bei dem Bearbeitungswerkzeug kann es sich um ein Werkzeug zum Sägen handeln, insbesondere um ein Sägeblatt. Das Bearbeitungswerkzeug kann aber auch ein Fräser, ein Bohrer oder ein beliebiges Trennwerkzeug sein, das nicht zum Sägen, sondern zur Durchführung anderer Trennarbeiten ausgebildet ist.

Ferner ist es denkbar, dass das Bearbeitungswerkzeug keine Eigenbewegung ausführt. Ein Antriebsmotor ist dann nicht erforderlich.

Bei vielen Bearbeitungsmaschinen, insbesondere bei Kappsägen, ist es grundsätzlich bekannt, eine Gehrungsfunktion und/oder eine Neigungsfunktion zu integrieren, was durch eine Verschwenkbarkeit um eine horizontale Achse bzw. um eine vertikale Achse erreicht wird. Gemäß einigen Ausführungsformen der erfindungsgemäßen Maschine kann ebenfalls vorgesehen sein, dass eine zusätzliche Verschwenkbarkeit der Arbeitseinheit um eine horizontale Achse und/oder um eine vertikale Achse gegeben ist, um eine Gehrungsfunktion (horizontale Achse) und/oder eine Neigungsfunktion (vertikale Achse) abzubilden. Vorzugsweise ist dabei die Führung samt Arbeitseinheit relativ zum Gestell oder das Gestell samt Führung und Arbeitseinheit relativ zu einer Basis verschwenkbar.

Weitere mögliche Ausführungsformen der Erfindung sind auch in den abhängigen Ansprüchen, der nachfolgenden Beschreibung sowie der Zeichnung angegeben.

Vorzugsweise ist das Getriebe als ein ebenes Getriebe ausgebildet.

In einigen Ausführungsformen der Erfindung sind die Gelenke des Getriebes jeweils als ein Drehgelenk ausgebildet oder umfassen jeweils ein Drehgelenk. Bei einem ebenen Getriebe verlaufen alle Drehachsen von Drehgelenken des Getriebes parallel zueinander.

Vorzugsweise weist das Getriebe einen Getriebefreiheitsgrad von f = 2 auf.

In einigen Ausführungsformen der Erfindung umfasst das Getriebe mehrere Drehgelenke und die Drehachsen der Drehgelenke verlaufen alle parallel zueinander, wobei bevorzugt die Drehachsen horizontal verlaufen.

Bei einigen Ausführungsformen der Erfindung kann vorgesehen sein, dass das Getriebe einen Zweischlag, der zwei durch ein Gelenk miteinander verbundene Getriebeglieder aufweist, und zur Beschränkung des durch den Zweischlag vorgegebenen Arbeitsbereiches der Arbeitseinheit einen Mechanismus umfasst. Der Zweischlag und der Mechanismus bilden zusammen mit dem Gestell ein mehrgliedriges System, insbesondere ein fünfgliedriges System, mit einem Getriebefreiheitsgrad f = 2. Für den Mechanismus ist eine mechanische Begrenzung vorgesehen ist, insbesondere ein geschlossener oder teilweise offener Rahmen oder zumindest ein Anschlagelement.

Insbesondere besteht der Mechanismus aus zwei miteinander und jeweils mit einem der Getriebeglieder des Zweischlags gelenkig verbundenen Getriebegliedern.

Insbesondere bilden der Zweischlag und der Mechanismus zusammen einen gelenkig mit dem Gestell verbundenen Pantografen. Auf einen Pantografen wird an anderer Stelle näher eingegangen.

In einigen Ausführungsformen der Erfindung weist das Getriebe zumindest zwei Gelenke oder genau zwei Gelenke auf, wobei ein Gelenk an dem ein Getriebeglied bildenden Gestell vorgesehen ist und ein weiteres Gelenk an einer Koppel vorgesehen ist, welche durch die Arbeitseinheit gebildet ist und ein weiteres Getriebeglied bildet. Dabei kann vorgesehen sein, dass das Gestell über das eine Gelenk mit einer ein weiteres Getriebeglied bildenden Schwinge und diese über das weitere Gelenk mit der Arbeitseinheit verbunden ist.

In einigen Ausführungsformen der Erfindung weist das das Getriebe zumindest fünf Gelenke auf, wobei ein erstes Gelenk und ein zweites Gelenk an dem ein erstes Getriebeglied bildenden Gestell und ein drittes Gelenk und ein viertes Gelenk an einer ersten Koppel vorgesehen sind, welche durch die Arbeitseinheit gebildet ist und ein zweites Getriebeglied bildet. Dabei kann vorgesehen sein, dass das Gestell über das erste Gelenk mit einer ein drittes Getriebeglied bildenden ersten Schwinge und diese über das dritte Gelenk mit der Arbeitseinheit verbunden ist, wobei außerdem das Gestell über das zweite Gelenk mit einer ein viertes Getriebeglied bildenden zweiten Schwinge und diese über ein fünftes Gelenk mit einer ein fünftes Getriebeglied bildenden zweiten Koppel verbunden ist, und wobei die zweite Koppel wiederum über das vierte Gelenk mit der Arbeitseinheit verbunden ist.

Wenn die erfindungsgemäß vorgesehene Beschränkung eine mechanische Begrenzung umfasst, dann ist diese zumindest während eines Bearbeitungsvorgangs gestellfest, d.h. die Beschränkung des Arbeitsbereiches erfolgt relativ zu dem Gestell. Optional kann die mechanische Begrenzung variabel, d.h. z.B. relativ zu dem Gestell verstellbar sein, um den beschränkten Arbeitsbereich an eine jeweilige Anwendung anpassen zu können. Dies kann z.B. für das Sägen von Nuten genutzt werden, worauf an anderer Stelle noch näher eingegangen wird.

In einigen Ausführungsformen der Erfindung kann die Beschränkung einen mit dem Getriebe, insbesondere mit lediglich einer Untermenge der Getriebeglieder des Getriebes, zusammenwirkenden Mechanismus umfassen, wobei zumindest ein Teil des Mechanismus, bevorzugt eine Mehrzahl von gelenkig miteinander verbundenen Gliedern, zusätzlich zu dem Getriebe vorgesehen sein kann.

In einigen Ausführungsformen der Erfindung ist der Mechanismus zur Beschränkung des Arbeitsbereichs zumindest teilweise in das Getriebe integriert und/oder der Mechanismus umfasst ein oder mehrere Getriebeglieder des Getriebes.

In einigen Ausführungsformen der Erfindung umfasst der Mechanismus zur Beschränkung des Arbeitsbereichs ein Gelenkmehreck, insbesondere ein Gelenkviereck, und/oder einen Pantografen.

Pantografen sind dem Fachmann grundsätzlich bekannt. Diese umfassen zumeist vier Glieder, welche über Drehgelenke miteinander verbunden sind, und dienen insbesondere zur Übertragung von Figuren, d.h. zur Übertragung der Bewegung eines Punktes eines ersten Gliedes auf die Bewegung eines Punktes eines weiteren Gliedes, sodass die durch die Bewegung des Punktes des zweiten Gliedes gebildete Figur einer Abbildung der durch die Bewegung des Punktes des ersten Gliedes gebildeten Figur entspricht und umgekehrt, wobei die Vorschrift für die Abbildung durch die Abmessungen des Pantografen und die Wahl der Punkte an den jeweiligen Gliedern gegeben ist.

Wenn die Arbeitseinheit also an einem Punkt eines Gliedes des Pantografen befestigt ist, kann der Arbeitsbereich der Arbeitseinheit beschränkt werden, indem der Bewegungsbereich eines anderen Punktes des Pantografen beschränkt wird. Da die Vorschrift für die Abbildung, insbesondere ein Skalierungsfaktor, durch eine geeignete Wahl der Abmessungen des Pantografen bestimmt werden kann, kann zum Beispiel der Bewegungsbereich des anderen Punktes relativ klein sein, während der daraus entstehende Arbeitsbereich der Arbeitseinheit wesentlich größer ist.

Ein relativ großer Arbeitsbereich der Arbeitseinheit kann also z.B. in allen Richtungen durch einen viel kleineren Rahmen beschränkt werden, indem die von dem Rahmen vorgegebene mechanische Begrenzung hinsichtlich Form, Größe und Orientierung in den Arbeitsbereich übertragen wird und so auch der Arbeitseinheit mechanische Grenzen setzt, ohne dass im Arbeitsbereich mechanische Begrenzungen vorgesehen werden müssten.

In einigen Weiterbildungen von Ausführungsformen der Erfindung, bei denen - wie vorstehend bereits erwähnt - das Gestell über das eine Gelenk mit einer ein weiteres Getriebeglied bildenden Schwinge und diese über das weitere Gelenk mit der Arbeitseinheit verbunden ist, kann vorgesehen sein, dass die Schwinge ein weiteres Gelenk aufweist, welches an einem Punkt der Schwinge befestigt ist, der den Abstand zwischen dem einen Gelenk und dem weiteren Gelenk in einem ersten Verhältnis teilt, und die Arbeitseinheit ein weiteres Gelenk aufweist, welches an einem Punkt der Arbeitseinheit befestigt ist, der den Abstand zwischen dem weiteren Gelenk und einem Ende der von der Arbeitseinheit gebildeten Koppel in einem zweiten Verhältnis teilt, und dass das eine weitere Gelenk und das andere weitere Gelenk durch eine Anordnung aus einer Mehrzahl von gelenkig miteinander verbundenen Gliedern miteinander verbunden sind.

Diese Anordnung kann einen Pantografen bilden oder ein Bestandteil eines Pantografen sein.

Insbesondere kann die Anordnung von zwei durch ein weiteres Gelenk miteinander verbundenen Gliedern gebildet sein.

Dabei kann vorgesehen sein, dass die Beschränkung eine zumindest in einer Richtung wirksame mechanische Begrenzung der Bewegung des die Glieder verbindenden weiteren Gelenks oder eines Tastelementes dieses weiteren Gelenks umfasst.

In einigen Weiterbildungen von Ausführungsformen der Erfindung, bei denen - wie vorstehend bereits erwähnt - das Gestell über das erste Gelenk mit einer ersten Schwinge und diese über das dritte Gelenk mit der Arbeitseinheit verbunden ist und außerdem das Gestell über das zweite Gelenk mit einer zweiten Schwinge und diese über ein fünftes Gelenk mit einer zweiten Koppel verbunden, wobei die zweite Koppel wiederum über das vierte Gelenk mit der Arbeitseinheit verbunden ist, kann vorgesehen sein, dass die erste Schwinge ein sechstes Gelenk aufweist, welches an einem Punkt der ersten Schwinge befestigt ist, der den Abstand zwischen dem ersten Gelenk und dem dritten Gelenk in einem ersten Verhältnis teilt, und dass die Arbeitseinheit ein siebtes Gelenk aufweist, welches an einem Punkt der Arbeitseinheit befestigt ist, der den Abstand zwischen dem dritten Gelenk und dem vierten Gelenk in einem zweiten Verhältnis teilt, wobei das sechste Gelenk und das siebte Gelenk durch eine Anordnung aus einer Mehrzahl von gelenkig miteinander verbundenen Gliedern miteinander verbunden.

Diese Anordnung kann einen Pantografen bilden oder ein Bestandteil eines Pantografen sein.

Insbesondere kann die Anordnung von zwei durch ein achtes Gelenk miteinander verbundenen Gliedern gebildet sein, wodurch die Position jedes Punktes der Arbeitseinheit und somit die Position des Bearbeitungswerkzeugs eindeutig durch die Position des achten Gelenks vorgegeben ist.

In einigen Ausführungsformen der Erfindung umfasst die Beschränkung eine zumindest in einer Richtung wirksame mechanische Begrenzung des Bewegungsbereichs des achten Gelenks oder eines Tastelementes des achten Gelenks.

In einigen Ausführungsformen der Erfindung ist zur Anpassung des beschränkten Arbeitsbereiches die Beschränkung, insbesondere eine mechanische Begrenzung, variabel. Eine solche variable Begrenzung bietet den Vorteil, dass mehrere unterschiedliche Bahnkurven für die Arbeitseinheit vorgegeben werden können, beispielweise geradlinig horizontal verlaufende Bahnkurven in unterschiedlicher Höhe, um so z.B. die Schnitttiefe einer Kappsäge vorgeben zu können. Es können alternativ z.B. auch Bahnkurven vorgegeben werden, die schräg nach oben oder unten verlaufen. Eine mechanische Begrenzung kann nicht nur als ein Anschlag insbesondere zu Sicherheitszwecken dienen, sondern vom Anwender auch gezielt als eine Zwangsführung für die Arbeitseinheit genutzt werden, um entlang einer definierten - grundsätzlich beliebig geradlinig oder zumindest teilweise gekrümmt verlaufenden - Bahnen zu arbeiten.

Vorzugsweise ist die Form, Position und/oder Ausrichtung der mechanischen Begrenzung variabel.

In einigen Ausführungsformen der Erfindung umfasst die mechanische Begrenzung zumindest ein Begrenzungselement, insbesondere einen geschlossenen oder teilweise offenen Rahmen oder ein Anschlagelement, wobei das Begrenzungselement relativ zu dem Gestell verstellbar und für einen jeweiligen Bearbeitungsvorgang relativ zu dem Gestell feststellbar ist.

Bei manchen Ausführungsformen der Erfindung kann vorgesehen sein, dass die Beschränkung derart variabel ist, dass eine, vorzugsweise geradlinige, Arbeitsbahn für die Arbeitseinheit, insbesondere für das Bearbeitungswerkzeug, hinsichtlich Verlauf und/oder Lage und/oder Orientierung relativ zu einer Werkstückauflage oder Werkstückanlage vorgebbar ist, insbesondere eine geradlinige, horizontal mit Abstand von einer horizontalen Werkstückauflage verlaufende Arbeitsbahn zur Herstellung von Nuten in einem auf der Werkstückauflage aufliegenden Werkstück.

Die Werkstückauflage oder Werkstückanlage kann dabei zum Beispiel von der Maschine selbst oder von der Umgebung, insbesondere dem Boden oder dem Arbeitstisch oder anderen Objekten, gebildet sein.

Die Erfindung wird im Folgenden beispielhaft unter Bezugnahme auf die Zeichnung beschrieben. Es zeigen:
- Fig. 1: schematisch ein mögliches Ausführungsbeispiel einer erfindungsgemäßen Bearbeitungsmaschine in Form einer Kappsäge,
- Fig. 2: schematisch das Ausführungsbeispiel von Fig. 1 in einer anderen Stellung,
- Fig. 3: schematisch das Ausführungsbeispiel von Fig. 1 in einer noch anderen Stellung, und
- Fig. 4 bis 6: schematisch ein weiteres mögliches Ausführungsbeispiel einer erfindungsgemäßen Bearbeitungsmaschine in Form einer Kappsäge in unterschiedlichen Stellungen.

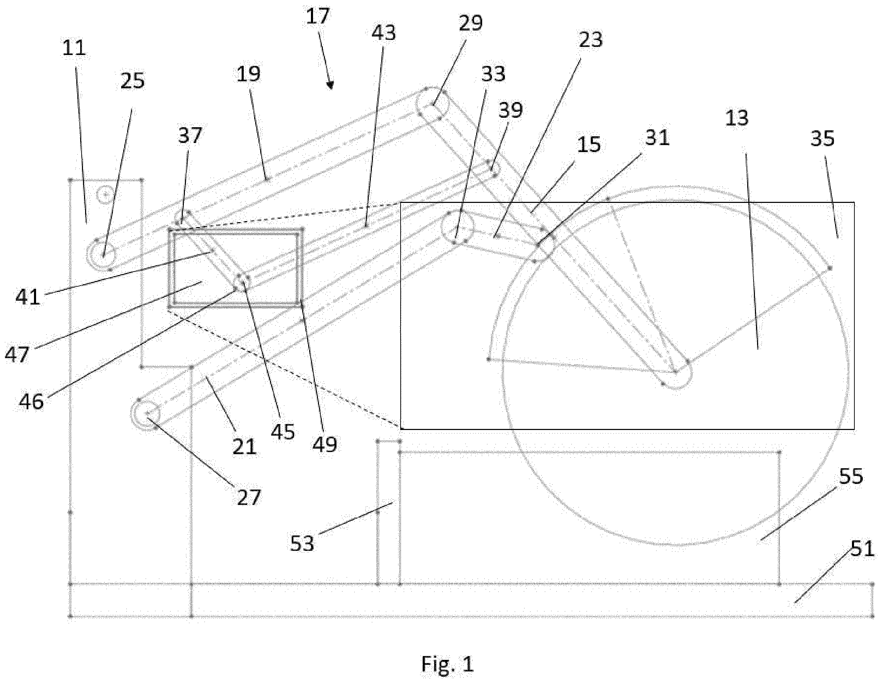

Bei der in den Fig. 1 bis 6 jeweils schematisch dargestellten erfindungsgemäßen Bearbeitungsmaschine handelt es sich um eine Kappsäge, die einen Sägetisch 51 als Basis umfasst, an der sich ein Gestell 11 abstützt. Eine Arbeitseinheit 15 ist über ein nachstehend näher beschriebenes Führungsgetriebe 17 relativ zum Gestell 11 bewegbar an diesem angebracht. Auf dem Sägetisch 51 ist ein Anschlag 53 vorgesehen, an den ein jeweils zu bearbeitendes Werkstück 55, das auf dem Sägetisch 51 aufliegt, angelegt werden kann.

Die Arbeitseinheit 15 ist an ihrem unteren Ende mit einem Sägeblatt 13 versehen, das lösbar an der Arbeitseinheit 15 anbringbar ist und beispielsweise durch einen Motor (nicht dargestellt) der Arbeitseinheit 15 antreibbar ist.

Beim Ausführungsbeispiel der Fig. 1 bis 3 ist das Führungsgetriebe 17 für die Arbeitseinheit 15 als Getriebe ausgebildet, und zwar als ein Koppelgetriebe mit fünf Getriebegliedern 11, 15, 19, 21, 23, welche durch fünf Drehgelenke 25, 27, 29, 31, 33 miteinander verbunden sind. Das erste Getriebeglied wird dabei durch das Gestell 11 gebildet. An diesem ist über das erste Drehgelenk 25 die ersten Schwinge 19 befestigt, welche das dritte Getriebeglied bildet. Diese wiederum ist über das dritte Drehgelenk 29 mit der ersten Koppel, die durch die Arbeitseinheit 15 gebildet wird, verbunden, an welcher wiederum über das vierte Drehgelenk 31 eine zweite Koppel 23 befestigt ist, die das fünfte Getriebeglied bildet. Die zweite Koppel 23 ist über das fünfte Drehgelenk 33 mit der zweiten Schwinge 21 verbunden, wobei die zweite Schwinge 21 wiederum durch das zweite Drehgelenk 27 an dem Gestell 11 befestigt ist.

Das so ausgebildete Führungsgetriebe 17 ist ein ebenes Getriebe und besitzt einen Getriebefreiheitsgrad von f = 2, wobei das an dem Getriebe 17 befestigte Sägeblatt 13 der Arbeitseinheit 15 in einem Arbeitsbereich 35 geführt werden kann, der durch eine Fläche gebildet wird, welche in der Ebene des Getriebes 17 liegt.

Aufgrund der oben beschriebenen Ausgestaltung des Getriebes 17 lässt sich das Sägeblatt 13 innerhalb der durch den Arbeitsbereich 35 gebildeten Fläche frei in zwei Raumrichtungen bewegen.

Der Arbeitsbereich 35 ist zum einen durch die Ausgestaltung des beschriebenen Getriebes 17 bestimmt, wird aber durch einen weiteren Mechanismus beschränkt, der nachfolgend beschrieben wird.

Dieser Mechanismus besteht aus zwei weiteren Gliedern 41, 43, welche über ein sechstes Drehgelenk 37 und ein siebtes Drehgelenk 39 an der ersten Schwinge 19 bzw. an der ersten Koppel 15 befestigt und über ein achtes Gelenk 45 miteinander verbunden sind. Die erste Schwinge 19 und die erste Koppel 15 bilden somit zusammen mit den beiden Gliedern 41, 43 ein ebenes Viergelenk, welches die Funktion eines Pantografen erfüllt. Während das erste Gelenk 25, über welches die erste Schwinge 19 an dem Gestell 11 befestigt ist, den Punkt bildet, um welchen der Pantograf gedreht wird, bilden das achte Gelenk 45 und der Punkt der ersten Koppel 15, an welchem das Bearbeitungswerkzeug 13 befestigt ist, die beiden Punkte des Pantografen, deren Bewegungen aufeinander abgebildet werden, d.h. jede Position des Sägeblatts 13 ist durch genau eine Position des achten Gelenks 45 gegeben.

Das achte Gelenk 45 ist mit einem Tastelement in Form einer Tastrolle 46 versehen, die um die Achse des Gelenks 45 frei drehen kann, und besitzt einen Bewegungsbereich 47, der durch eine mechanische Begrenzung 49, welche hier als Rahmen ausgeführt ist, für die Tastrolle 46 beschränkt ist. Diese Beschränkung des Bewegungsbereichs 47 der Tastrolle 46 und folglich des achten Gelenks 45 führt somit zu einer Beschränkung des Arbeitsbereichs 35 des Sägeblatts 13. Die Form des Arbeitsbereichs 35 - hier als Rechteck dargestellt - lässt sich somit durch die Form des Bewegungsbereichs 47 des achten Gelenks 45 festlegen, wobei der Bewegungsbereich 47 durch die mechanische Begrenzung 49 definiert wird. Es ist zu erkennen, dass der Bewegungsbereich 47 für die Tastrolle 46 im Vergleich zum Arbeitsbereich 35 des Sägeblatts 13 klein ist.

Während das Sägeblatt 13 innerhalb des Arbeitsbereichs 35 frei geführt werden kann, bietet die definierte Begrenzung des Arbeitsbereichs 35 durch die Beschränkung des Bewegungsbereiches 47 des achten Gelenks 45 mehrere Vorteile.

Zum einen kann eine Beschädigung des Gestells 11 und des Sägetisches 51 durch das Sägeblatt 13 wirksam verhindert werden. Des Weiteren kann die Begrenzung des Arbeitsbereichs 35 als Zwangsführung für die Ausführung spezifischer Schnitte entlang vorgegebener Bahnen und insbesondere mit begrenzten Schnitttiefen dienen. Wenn die mechanische Begrenzung 49 für die Tastrolle 46 verstellbar ausgebildet ist, lassen sich unterschiedliche Bahnen bzw. Schnitttiefen vorgeben. Ein Beispiel für eine vorgegebene Schnittführung ist das Sägen von Nuten mit definierter Tiefe in einem Werkstück.

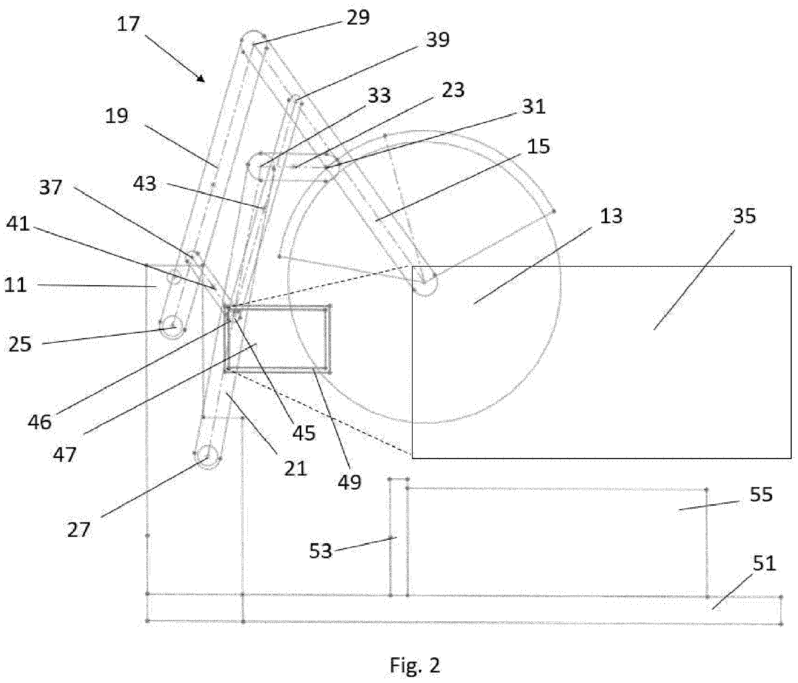

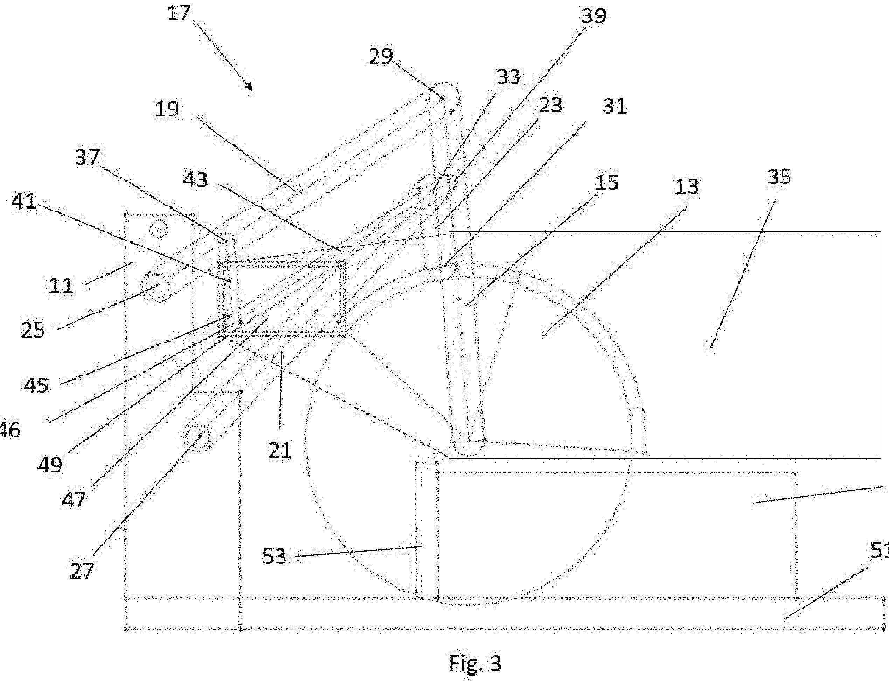

Die Fig. 2 und 3 zeigen die Kappsäge von Fig. 1 mit anderen Stellungen des Sägeblatts 13, welche sich zum Beispiel als sichere Transportstellung, als Platz sparende Aufbewahrungsstellung (Fig. 3) oder als Ausgangsstellung vor Beginn eines jeweiligen Bearbeitungsvorgangs (Fig. 2) eignen.

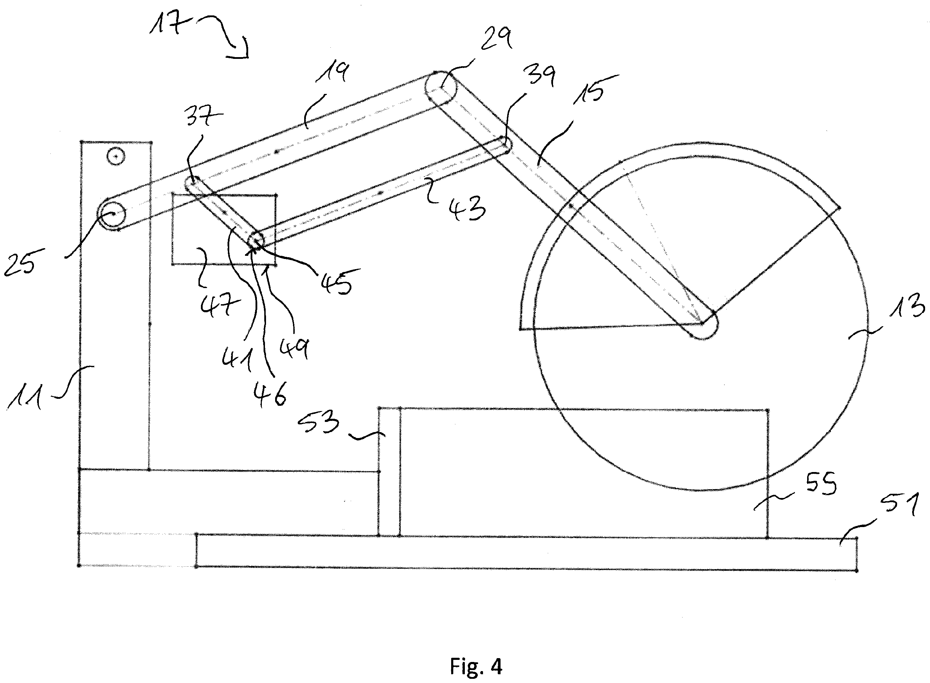

Das Ausführungsbeispiel der Fig. 4 bis 6 unterscheidet sich von dem Ausführungsbeispiel der Fig. 1 bis 3 dadurch, dass bei der Führung 17 für die Arbeitseinheit 15 die untere Schwinge 21 und das weitere Getriebeglied 23 weggelassen sind. In getriebetechnischer Hinsicht und somit hinsichtlich der Führung der Arbeitsbewegung der Arbeitseinheit ändert sich hierdurch nichts. Es wurden sozusagen die in getriebetechnischer Sicht überflüssigen Elemente weggelassen. Die resultierende Anordnung kann so beschrieben werden, dass mit der Schwinge 19 und der Arbeitseinheit 15 ein sogenannter Zweischlag vorgesehen ist, der gelenkig mit dem Gestell 11 verbunden und um den Mechanismus ergänzt ist, der von den beiden Gliedern 41, 43 gebildet ist. Die beiden Glieder 41, 43 sind wiederum durch das Gelenk 45 gelenkig miteinander und über die Gelenke 37, 39 mit der Schwinge 19 und der Arbeitseinheit 15 verbunden.

Für den Getriebefreiheitsgrad f des Zweischlags 15, 19 und damit der Gesamtanordnung gilt weiterhin f = 2. Diese Anordnung bildet wiederum einen an das Gestell 11 angelenkten Pantografen.

Der in den Fig. 4 bis 6 nicht dargestellte Arbeitsbereich für das Sägeblatt 13 ist wiederum dadurch beschränkt, dass eine mechanische Begrenzung 49 in Form eines Rahmens vorgesehen ist, der den Bewegungsbereich 47 für die Tastrolle 46 des Gelenks 45 beschränkt. Auch bei diesem Ausführungsbeispiel ist somit durch die Form des Arbeitsbereichs 35 - hier wiederum als Rechteck dargestellt - die Form des Bewegungsbereiches 47 für die Tastrolle 46 festgelegt. Das Sägeblatt 13 kann also innerhalb des Arbeitsbereiches frei geführt werden, wobei die mechanische Begrenzung 49 wiederum für die vorteilhafte definierte Begrenzung des Arbeitsbereiches sorgt.

Hinsichtlich der Vorteile und möglichen Weiterbildungen wird somit auf die Beschreibung zum Ausführungsbeispiel der Fig. 1 bis 3 verwiesen.

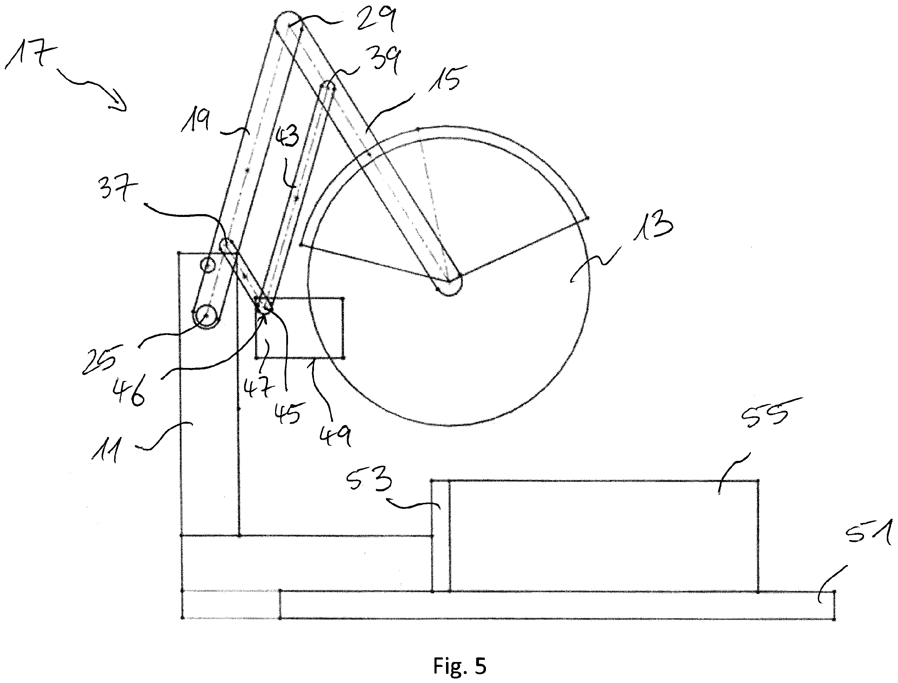

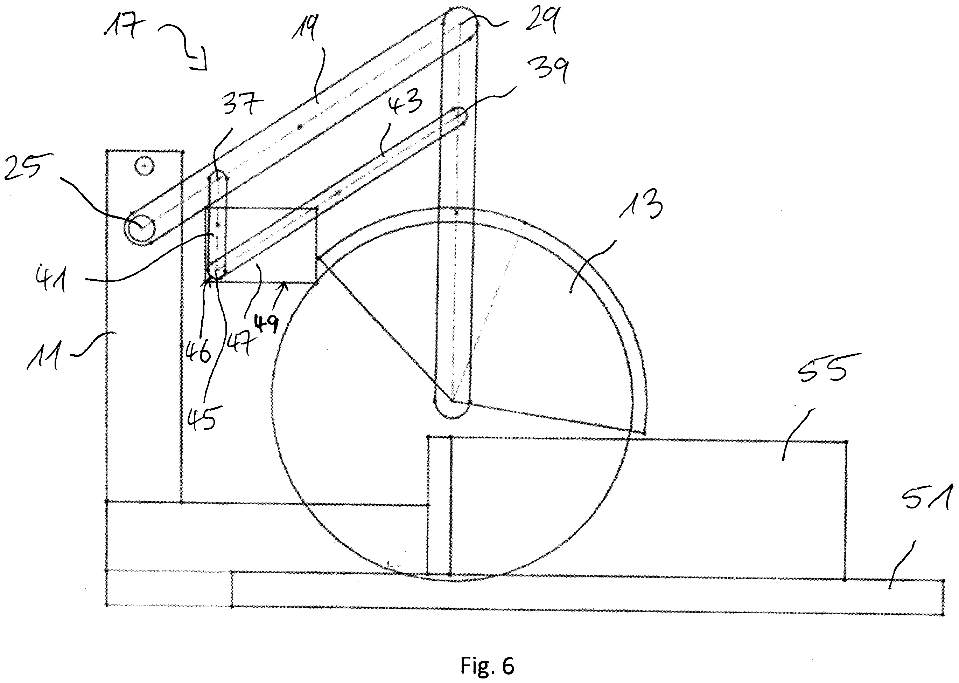

Während Fig. 4 die Kappsäge beim Durchtrennen eines Werkstücks 55 zeigt, veranschaulicht Fig. 5 entsprechend Fig. 2 eine Ausgangsstellung vor Beginn eines jeweiligen Bearbeitungsvorgangs und zeigt Fig. 6 entsprechend Fig. 3 eine platzsparende Aufbewahrungsstellung.

### Bezugszeichenliste

- 11: Gestell, Getriebeglied
- 13: Bearbeitungswerkzeug, Sägeblatt
- 15: Arbeitseinheit, Koppel, Getriebeglied
- 17: Führung, Getriebe
- 19: Getriebeglied, Schwinge
- 21: Getriebeglied, Schwinge
- 23: Getriebeglied, Koppel
- 25: Gelenk
- 27: Gelenk
- 29: Gelenk
- 31: Gelenk
- 33: Gelenk
- 35: Arbeitsbereich
- 37: Gelenk
- 39: Gelenk
- 41: Glied
- 43: Glied
- 45: Gelenk
- 46: Tastelement
- 47: Bewegungsbereich
- 49: mechanische Begrenzung
- 51: Sägetisch
- 53: Anschlag
- 55: Werkstück

## Patentansprüche

1. Elektrische Bearbeitungsmaschine, insbesondere Kappsäge, zum Bearbeiten von Werkstücken, insbesondere zum Sägen,
mit einem Gestell (11) und mit einer an dem Gestell (11) angebrachten, ein Bearbeitungswerkzeug (13), insbesondere ein Sägeblatt, umfassenden Arbeitseinheit (15),
wobei die Arbeitseinheit (15) an dem Gestell (11) über eine Führung (17) angebracht ist, die eine geführte Arbeitsbewegung der Arbeitseinheit (15) relativ zu dem Gestell (11) ermöglicht,
wobei die Führung (17) als ein Getriebe, insbesondere als ein Koppelgetriebe, ausgebildet ist, und
wobei ein durch das Getriebe (17) vorgegebener Arbeitsbereich (35) der Arbeitseinheit (13), insbesondere des Bearbeitungswerkzeugs (13), einer zusätzlichen Beschränkung unterworfen ist, insbesondere wobei die zusätzliche Beschränkung eine mechanische Begrenzung umfasst, insbesondere einen geschlossenen oder teilweise offenen Rahmen oder zumindest ein Anschlagelement.

2. Maschine nach Anspruch 1,
wobei das Getriebe (17) als ein ebenes Getriebe ausgebildet ist, und/oder
wobei die Gelenke (25, 27, 29, 31, 33) des Getriebes jeweils als ein Drehgelenk ausgebildet sind oder jeweils ein Drehgelenk umfassen.

3. Maschine nach Anspruch 1 oder 2,
wobei das Getriebe (17) einen Getriebefreiheitsgrad f aufweist, wobei f = 2 gilt.

4. Maschine nach einem der vorhergehenden Ansprüche,
wobei das Getriebe (17) einen zwei durch ein Gelenk (45) miteinander verbundene Getriebeglieder (15, 19) umfassenden Zweischlag und zur Beschränkung des durch den Zweischlag vorgegebenen Arbeitsbereiches (35) der Arbeitseinheit (13) einen Mechanismus (41, 43), insbesondere zwei miteinander und jeweils mit einem der Getriebeglieder (15, 19) des Zweischlags gelenkig verbundene Getriebeglieder (41, 43), umfasst, wobei der Zweischlag (15, 19) und der Mechanismus (41, 43) zusammen mit dem Gestell (11) ein mehrgliedriges System, insbesondere ein fünfgliedriges System, mit einem Getriebefreiheitsgrad f = 2 bilden, insbesondere einen Pantografen, und wobei für den Mechanismus (41, 43) eine mechanische Begrenzung vorgesehen ist, insbesondere ein geschlossener oder teilweise offener Rahmen oder zumindest ein Anschlagelement.

5. Maschine nach einem der vorhergehenden Ansprüche,
wobei das Getriebe mehrere Drehgelenke (25, 27, 29, 31, 33) umfasst und die Drehachsen der Drehgelenke (25, 27, 29, 31, 33) alle parallel zueinander verlaufen, wobei bevorzugt die Drehachsen horizontal verlaufen.

6. Maschine nach einem der vorhergehenden Ansprüche,
wobei das Getriebe (17) zumindest zwei Gelenke (25, 27, 29, 31, 33) oder genau zwei Gelenke (25, 29) aufweist, wobei ein Gelenk (25) an dem ein Getriebeglied bildenden Gestell (11) vorgesehen ist und ein weiteres Gelenk (29) an einer Koppel vorgesehen ist, welche durch die Arbeitseinheit (15) gebildet ist und ein weiteres Getriebeglied bildet.

7. Maschine nach Anspruch 6,
wobei das Gestell (11) über das eine Gelenk (25) mit einer ein weiteres Getriebeglied bildenden Schwinge (19) und diese über das weitere Gelenk (29) mit der Arbeitseinheit (15) verbunden ist.

8. Maschine nach einem der vorhergehenden Ansprüche,
wobei die Beschränkung einen mit dem Getriebe (17), insbesondere mit lediglich einer Untermenge der Getriebeglieder (15, 19) des Getriebes (17), zusammenwirkenden Mechanismus umfasst.

9. Maschine nach Anspruch 8,
wobei zumindest ein Teil des Mechanismus, bevorzugt eine Mehrzahl von gelenkig miteinander verbundenen Gliedern (41, 43), zusätzlich zu dem Getriebe (17) vorgesehen ist.

10. Maschine nach Anspruch 8 oder 9,
wobei der Mechanismus zumindest teilweise in das Getriebe (17) integriert ist und/oder wobei der Mechanismus ein oder mehrere Getriebeglieder (15, 19) des Getriebes (17) umfasst.

11. Maschine nach einem der Ansprüche 8 bis 10,
wobei der Mechanismus ein Gelenkmehreck, insbesondere ein Gelenkviereck, und/oder einen Pantografen umfasst.

12. Maschine nach einem der Ansprüche 7 bis 11,
wobei die Schwinge (19) ein weiteres Gelenk (37) aufweist, welches an einem Punkt der Schwinge (19) befestigt ist, der den Abstand zwischen dem einen Gelenk (25) und dem weiteren Gelenk (29) in einem ersten Verhältnis teilt, und die Arbeitseinheit (15) ein weiteres Gelenk (39) aufweist, welches an einem Punkt der Arbeitseinheit (15) befestigt ist, der den Abstand zwischen dem weiteren Gelenk (29) und einem Ende der von der Arbeitseinheit (15) gebildeten Koppel in einem zweiten Verhältnis teilt, und wobei das eine weitere Gelenk (37) und das andere weitere Gelenk (39) durch eine Anordnung aus einer Mehrzahl von gelenkig miteinander verbundenen Gliedern (41, 43) miteinander verbunden sind, insbesondere wobei die Anordnung von zwei durch ein weiteres Gelenk (45) miteinander verbundenen Gliedern (41, 43) gebildet ist,
wobei die Beschränkung vorzugsweise eine zumindest in einer Richtung wirksame mechanische Begrenzung (49) der Bewegung des die Glieder (41, 45) verbindenden weiteren Gelenks (45) oder eines Tastelementes (46) dieses weiteren Gelenks (45) umfasst.

13. Maschine nach einem der vorhergehenden Ansprüche,
wobei zur Anpassung des beschränkten Arbeitsbereiches die Beschränkung, insbesondere eine mechanische Begrenzung (49), variabel ist.

14. Maschine nach Anspruch 13,
wobei die Form, Position und/oder Ausrichtung der mechanischen Begrenzung (49) variabel ist,
wobei die mechanische Begrenzung (49) vorzugsweise zumindest ein Begrenzungselement umfasst, insbesondere einen geschlossenen oder teilweise offenen Rahmen oder ein Anschlagelement, welches relativ zu dem Gestell (11) verstellbar und für einen jeweiligen Bearbeitungsvorgang relativ zu dem Gestell (11) feststellbar ist.

15. Maschine nach Anspruch 13 oder 14,
wobei die Beschränkung derart variabel ist, dass eine, vorzugsweise geradlinige, Arbeitsbahn für die Arbeitseinheit (15), insbesondere für das Bearbeitungswerkzeug (13), hinsichtlich Verlauf und/oder Lage und/oder Orientierung relativ zu einer Werkstückauflage oder Werkstückanlage vorgebbar ist, insbesondere eine geradlinige, horizontal mit Abstand von einer horizontalen Werkstückauflage verlaufende Arbeitsbahn zur Herstellung von Nuten in einem auf der Werkstückauflage aufliegenden Werkstück.
